# EUROPEAN PATENT APPLICATION

(11) **EP 4 567 077 A1**
(43) Date of publication of application: **11.06.2025**
(21) Application number: 24154610.0
(22) Date of filing: 30.01.2024
(51) Int. Cl.: C09D 5/24

(54) **ELECTRICALLY CONDUCTIVE CERAMIC COATING AND SENSING ELEMENT COMPRISING SAID COATING**

(30) Priority: 06.12.2023 IN 202341083065
(71) Applicant: Henkel AG & Co. KGaA, 40589 Düsseldorf (DE)
(72) Inventor: Tathe, Dipak, 443401 Maharashtra (IN); Shah, Jayesh P, 411001 Pune (IN); Dhuriya, Rakhi, 411057 Pune, Maharashtra (IN)

(57) **Abstract**

The invention relates to an electrically conductive ceramic coating (100) for monitoring degradation of said ceramic coating (100), the electrically conductive ceramic coating (100) comprising:
(a) at least one ceramic filler (1) in the form of at least one among: beads, needles, plates and particles;
(b) at least one electrically conductive filler (2);
(c) a thermoset resin (3),
wherein the at least one electrically conductive filler (2) is dispersed within the mix of thermoset resin (3) and at least one ceramic filler (1) so as to form conduction paths throughout the electrically conductive ceramic coating (100). The invention also relates to a sensor system (200) comprising this coating (100) and to a method (800) for detecting a deterioration of the coating (100).

## Description

### Technical Field

The invention relates to a ceramic coating that is used both as a protective sheath around an industrial asset and as a sensing element to monitor the progression of erosion through the coating.

### Technological Background

Industrial assets such as pipes, tanks, pumps, elbows, steam traps, flanges or any equipment and machine are subject to continuous wear and tear. Some of this wear and tear is due to its use and it affects the internal portions of the assets. Others are due to natural decay occurring from the environment in which the asset is located. Corrosive environments, erosion, acidic or alkali media, chemical hazard, weather-induced hazard affect which leads to erosion of internal or external surfaces of assets until they breach an outer sheath or simply render the asset unusable.

A malfunctioning asset that is not usable can lead to excessive costs by halting production in a manufacturing line. To avoid such losses, industrial assets are usually monitored using sensors, cameras or personal inspecting facilities to detect defects and attempt to fix them before they lead to costly disruptions.

Generally such monitoring systems are not suitable for monitoring the internal condition of assets because of dynamic working conditions such as for example temperature, chemicals acting on the assets, the presence or absence of water or humidity.

There is therefore still a need to develop a solution to both improve the protection of assets against hazards and to be sensitive to a deterioration of the asset, for example by the internal dynamic working conditions mentioned above or external hazards.

### Summary of the invention

The present invention provides an electrically conductive ceramic coating for monitoring degradation of said ceramic coating, the electrically conductive ceramic coating comprising:
(a) at least one ceramic filler in the form of at least one among: beads, needles, plates and particles;
(b) at least one electrically conductive filler;
(c) a thermoset resin,
wherein the at least one electrically conductive filler is dispersed within the mix of thermoset resin and at least one ceramic filler so as to form conduction paths throughout the electrically conductive ceramic coating.

The electrically conductive coating of the invention is particularly suitable to fulfill two functions: offer considerable mechanical resistance to the coating, via the inclusion of ceramic material in the form of beads, needles, plates or particles and to offer a substantially homogenous medium that is electrically conductive, enabling a reliable monitoring of the state of the coating by measuring the electrical resistance across the coating.

The dispersion of an electrically conductive filler in the structure of a ceramic material having the particular shape mentioned above (beads, needles, plates or particles) leads to a substantially homogenous medium which displays the same local electrical properties throughout the coating. Both elements: the ceramic filler and the electrically conductive filler are held together by a thermoset resin.

Due to the substantially homogenous medium provided with this setup in the coating, it is possible to measure a change of resistance across the coating upon damage made to the coating, in particular erosion or abrasion damage. Such damage would rip off parts of the coating and therefore create a local reduction in the cross section of the electrically conductive medium which would translate as an increase in electrical resistance.

This coating can serve as a protective coating for an industrial asset such as a pipe, elbow of a pipe, a pump, a valve, a flange, hoppers, chutes. The coating with its ceramic filler is particularly suitable to protect the asset against deterioration such as corrosion, erosion or abrasion.

According to an embodiment, the at least one ceramic filler is chosen from among: alumina, silicon carbide, granite, calcium carbonate, silica, steel, titanium, zirconium, needle-shaped wollastonite, plate-shaped mica.

These materials provide strength to the coating.

According to an embodiment, the at least one electrically conductive filler comprises electrically conductive carbon nanostructures.

More particularly, the at least one electrically conductive filler comprises at least one among: single wall electrically conductive carbon nanotubes, multi-walled electrically conductive carbon nanotubes.

The advantage of electrically conductive nanostructures, such as single wall or multi walled electrically conductive carbon nanotubes is that they can offer sufficient electrical conductivity with very low amounts within the coating and can easily occupy all the space within the coating to avoid the local formation of clusters. To achieve this substantially homogeneous dispersion, a dedicated mixing step can be implemented to disperse the nanostructures among the ceramic material of the coating before hardening.

According to an embodiment, the thermoset resin comprises at least one among: novolac, bisphenol-A, bisphenol-F, urethane, acrylic, vinyl ester, an epoxy-siloxane blend.

According to an embodiment, the at least one ceramic filler represents 50% to 85% of the weight of the electrically conductive ceramic coating.

Such a proportion of ceramic filler material typically confers a high mechanical resistance to the coating.

According to an embodiment, the at least one electrically conductive filler represents 0,05 % to 2,0 % of the weight of the electrically conductive ceramic coating.

The invention also concerns a sensor system for monitoring degradation of an electrically conductive ceramic coating as described above comprising:
- at least one electrically conductive ceramic coating as described above arranged on a surface of an asset and comprising at least two spaced apart contact points;
- at least two electrical contacts, each of the at least two electrical contacts being arranged at each of the at least two spaced apart contact points;
- a resistance measuring device configured to measure resistance across the at least two electrical contacts.

Such a system relies on the special properties of the coating as described above. By actively measuring the resistance across electrical contacts arranged at sides/extremities of the coating, or simply at selected point withing the coating, it is possible to determine whether the coating was subjected to erosion. The detection principle relies on the fact that the homogeneous medium of the coating makes the detection sensitive to a reduction in cross section of the coating which translates into an increase in the measured electrical resistance across electrical contacts arranged on either side of the reduced cross-section. Advantageously, the electrical contacts are arranged on the same substrate as the electrically conductive ceramic coating, so that the electrically conductive ceramic coating partially extends above the electrical contacts.

According to an embodiment, the at least two electrical contacts comprise at least three electrical contacts or more, arranged at three or more corresponding spaced apart contact points, the resistance measuring device being configured to measure the resistance across any combination of two different electrical contacts.

By using more than two electrical contacts, it is possible to detect the localized erosion more precisely. Several electrical contacts allow a measurement of the evolution over time of the electrical resistance across different pairs of electrical contacts. These electrical contacts can be arranged in many different ways across the surface or at extremities, for example at opposite sides of the electrically conductive ceramic coating.

According to an embodiment, the at least two electrical contacts comprise a plurality of electrical contacts arranged at different contacts points around the at least one electrically conductive ceramic coating, so that a change in measured resistance across two pairs of different electrical contacts enables a determination of the location of a deterioration of the at least one electrically conductive ceramic coating.

According to an embodiment, the asset comprises a plurality of electrically conductive ceramic coatings as described above arranged on the surface of the asset, each electrically conductive ceramic coating comprising:
- at least two spaced apart contact points;
- at least two electrical contacts, each of the at least two electrical contacts being arranged at each of the at least two spaced apart contact points;
- a resistance measuring device configured to measure resistance across the at least two electrical contacts.

One arrangement according to the invention can consist of a system comprising several batches of electrically conductive ceramic coatings arranged over several locations of the asset. This way, locating an erosion event can be done by identifying which coating was subjected to a measured increased in the electrical resistance across electrical contacts.

The invention also pertains to a method for detecting a deterioration of an electrically conductive ceramic coating as described above, the method comprising, in a system as described above:
- measuring a resistance across at least two different electrical contacts;
- upon detecting a change in the measured resistance, determining, based on the detected change, that a corresponding electrically conductive ceramic coating at which the change in resistance is measured is deteriorated.

According to an embodiment the method further comprises, in a system comprising a plurality of electrical contacts arranged at different contact points around the at least one electrically conductive ceramic coating:
- measuring a resistance across different pairs of electrical contacts;
- upon detecting a change of the measured resistance across at least two different pairs of electrical contacts, determine that a deterioration of the at least one electrically conductive ceramic coating occurred at an intersection of lines joining electrical contacts of the at least two different pairs.

According to an embodiment, the method further comprises, in a system comprising a plurality of electrical contacts arranged at different contacts points around the at least one electrically conductive ceramic coating:
- measuring a resistance across different pairs of electrical contacts;
- upon detecting a change of the measured resistance across at least two different pairs of electrical contacts, determine that a deterioration of the at least one electrically conductive ceramic coating occurred at an intersection of lines joining electrical contacts of the at least two different pairs for which the change in measured resistance is the highest among the measured changes in resistance.

According to an embodiment, the method further comprises a determination of a degree of the deterioration based on the amplitude of the change in measured resistance.

Indeed, the higher the measured electrical resistance or the higher the increase in the measured resistance the more likely it is that the erosion reached a significant depth inside the electrically conductive ceramic coating and that its extent is also large.

### Brief description of the drawings

The present disclosure will hereinafter be described in conjunction with the following drawing figures, wherein like numerals denote like elements, and:
Fig. 1 is a schematic representation of an electrically conductive ceramic coating according to an embodiment;
Fig. 2 is a schematic representation of a section of a sensor system for monitoring degradation of an electrically conductive ceramic coating according to an embodiment;
Fig. 3 and Fig. 4 are schematic representations of the sensor system of figure 2 subject to progressive erosion;
Fig. 5 is a schematic representation of a top view of a sensor system for monitoring degradation of an electrically conductive ceramic coating according to an embodiment;
Fig. 6 is a schematic representation of a top view of a sensor system for monitoring degradation of an electrically conductive ceramic coating subject to erosion according to an embodiment;
Fig. 7 is diagram showing the evolution over time of the electrical resistance measured across two different pairs of electrical contacts across which the erosion of the electrically conductive ceramic coating is different;
Fig. 8 is a flowchart showing exemplary steps of a method for monitoring degradation of an electrically conductive ceramic coating according to an exemplary embodiment.

### Detailed description

The invention pertains to an electrically conductive ceramic coating, suitable for detecting and monitoring the deterioration of that electrically conductive ceramic coating using a sensing element comprising this coating and connected to a device for measuring changes in electrical resistance across the coating.

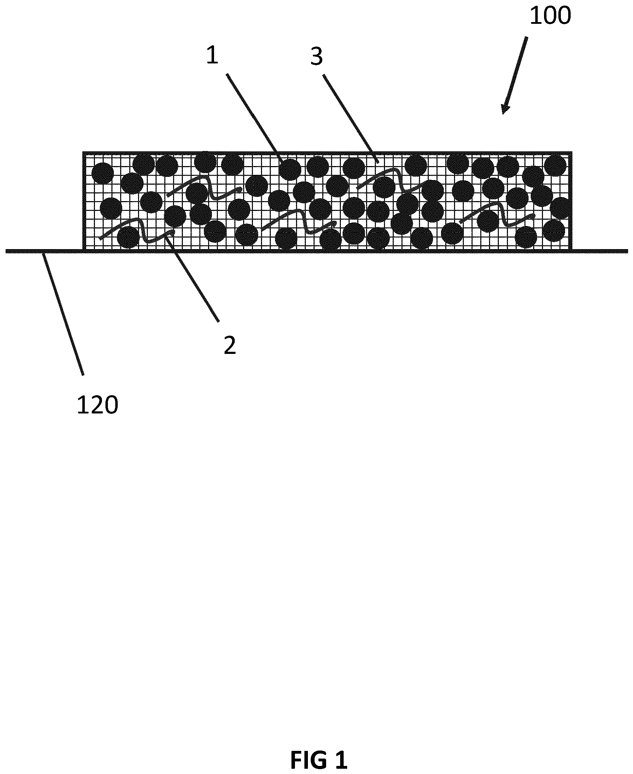

As seen on figure 1, the electrically conductive ceramic coating **100** is composed of a mix of three main ingredients: at least one type of ceramic filler **1,** at least one type of electrically conductive filler **2** and at least one type of thermoset resin **3.** These elements are mixed to form a composition such as the electrically conductive ceramic coating **100** of figure 1 shown after application on top of a surface structure **120.**

The ceramic filler **1** is typically selected from among alumina, silicon carbide, granite, calcium carbonate, wollastonite, mica, silica, metal and metal oxide fillers like steel, titanium or zirconium. Advantageously, these ceramic fillers **1** are not formed of a monobloc but rather exist in smaller units dispersed within the electrically conductive ceramic coating **100.** Each type of ceramic filler **1** can for example be in the form of beads, particles, needles or plates. Silicon carbide and alumina can typically appear in the form of beads. Calcium carbonate, silica, metal and metal oxide fillers like steel, titanium or zirconium can exist in particle form, wherein particles can be viewed as smaller beads than those used for silicon carbide and alumina. Wollastonite can advantageously be used in needle-shaped units and mica in plate-shape structures. Although one can use only one type of form with one type of ceramic filler **1,** it is perfectly possible to configure all possible arrangements mixing for one type of ceramic filler **1** different shapes and/or associate several types of ceramic fillers **1** having the same shape or different shapes. Typically the ceramic filler **1** represents from 50% to 85% of the weight of the electrically conductive ceramic coating **100.** Typical sizes for the longest dimension of the ceramic filler **1** structures is about up to 1 mm, other dimensions ranging from 10 microns to 100 microns.

It is to be further noted that to improve the mechanical strength of the electrically conductive ceramic coating **100,** it is advantageous to have different sizes of ceramic filler **1.** For example larger and smaller beads mixed together occupy more volume within the coating with the mechanically resistant ceramic filler **1** than large beads of a same size only. It is also possible to have a mixture of ceramic filler **1** of a certain type but of different sizes, mixed with other types of ceramic filler **1.** For example a combination of different sizes of alumina beads with different sizes of silicon carbide particles can lead to an even stronger electrically conductive ceramic coating **100,** in which the mechanical properties of both alumina and silicon carbide combine. Other combinations of ceramic fillers **1** from the above list can also be advantageously used to benefit from the additive effect of the mechanical reinforcement provided by each type of ceramic filler **1.**

The electrically conductive filler **2** is typically a carbon nanostructure. Single-walled electrically conductive carbon nanotubes are preferred carbon nanostructures because of their specific shape and ability to form homogenous conducive pathways even with low concentrations of electrically conductive filler **2.** With single-walled electrically conductive carbon nanotubes, the electrically conductive filler **2** can typically represent about 0,05 % to 2,0 % of the weight of the electrically conductive ceramic coating **100.** Multi-walled electrically conductive carbon nanotubes can also be used alone or in combination with single-walled electrically conductive carbon nanotubes and the carbon nanotubes can be further mixed with other conductive nanostructures.

The thermoset resin **3** is used to hold together the mixture comprising the electrically conductive filler **2** and the ceramic filler **1.** Typical thermoset resins may be selected from: novolac, bisphenol-A, bisphenol-F, epoxy resin, urethane, acrylic, vinyl esters, epoxy-siloxane blend.

In order to prepare the electrically conductive ceramic coating **100,** the at least one electrically conductive filler **2** is pre-dispersed in the at least one thermoset resin **3.** This step can be implemented by using high speed dispersing machines operating at 3000 rotations per minute for about 10 min to 30 min. Then the obtained mixture can be further processed in a multi-roll mill (for example a 3-roll mill).

This prepared and processed mixture is then mixed with the at least one ceramic filler **1.** The composition is then cured using a hardening material such as a curing agent, for example an amine hardener. The composition is applied before hardening on a substrate **120** which is intended to be reinforced and for which monitoring of corrosion and erosion processes will be implemented on the electrically conductive ceramic coating **100.** This monitoring will check the state of the electrically conductive ceramic coating **100** as it changes through erosion or corrosion processes, to avert that any such erosion or corrosion reaches the substrate reinforced by the electrically conductive ceramic coating **100.** After deposition of the composition on the substrate **120,** the electrically conductive ceramic coating **100** is created by hardening the composition using a curing agent such as an amine hardener and by letting the composition cure for 24 hours and then subjecting the composition to a 100°C temperature for 1 hour.

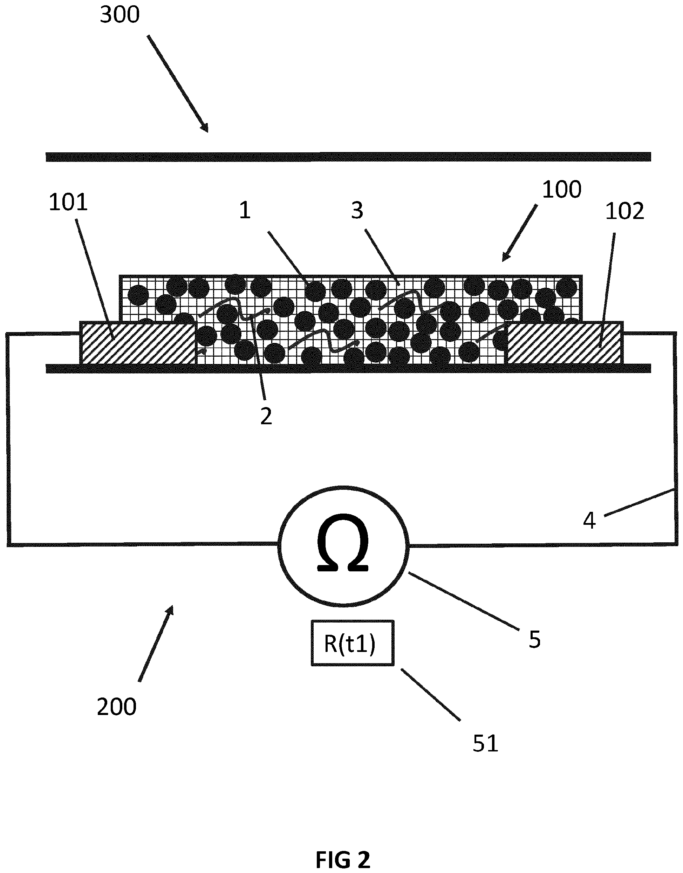

The invention also pertains to a sensor system for monitoring degradation of an electrically conductive ceramic coating **100.** Figure 2 schematically represents such a sensor system **200.** It can typically be comprised of an asset **300** on a surface of which at least two electrical contacts **101, 102** are arranged. These electrical contacts **101, 102** are placed at specific locations that are referred to as contact points. The electrical contacts **101, 102** can typically be copper leads that may be placed on top of a polyamide film or any other non conductive substrate **120** placed between the surface of the asset **300** and the electrical contacts **101, 102.** It is to be noted that the electrically conductive ceramic coating **100** may be formed on the inner surface of the asset **300** to make sure no internal erosion or corrosion damages the asset **300** but also on the outer surface of the asset **300** to protect it from external damage.

The term asset **300** can typically refer to any industrial asset 300 such as a pipe, a flange, a pump an elbow, a hopper, a chute.

As illustrated on figure 2, the electrically conductive ceramic coating **100** is arranged on the asset **300** so that it overlaps with a portion of the electrical contacts **101, 102.** This arrangement ensures that the electrical contacts **101, 102** form a continuity of matter with the electrically conductive ceramic coating **100,** despite both elements being made of different materials. In other words, the electrical contacts **101, 102** contact the electrically conductive ceramic coating **100** sufficiently to ensure a reliable measurement of the electrical resistance across the electrically conductive ceramic coating **100.** The electrical contacts **101, 102** are electrically connected via wiring **4** to a resistance measuring device **5,** configured to measure the electrical resistance **51** between the electrical contacts **101, 102** across the electrically conductive ceramic coating **100.** It is also possible to arrange the electrical contacts **101, 102** so that they are adjacent to a side face of the electrically conductive ceramic coating **100.**

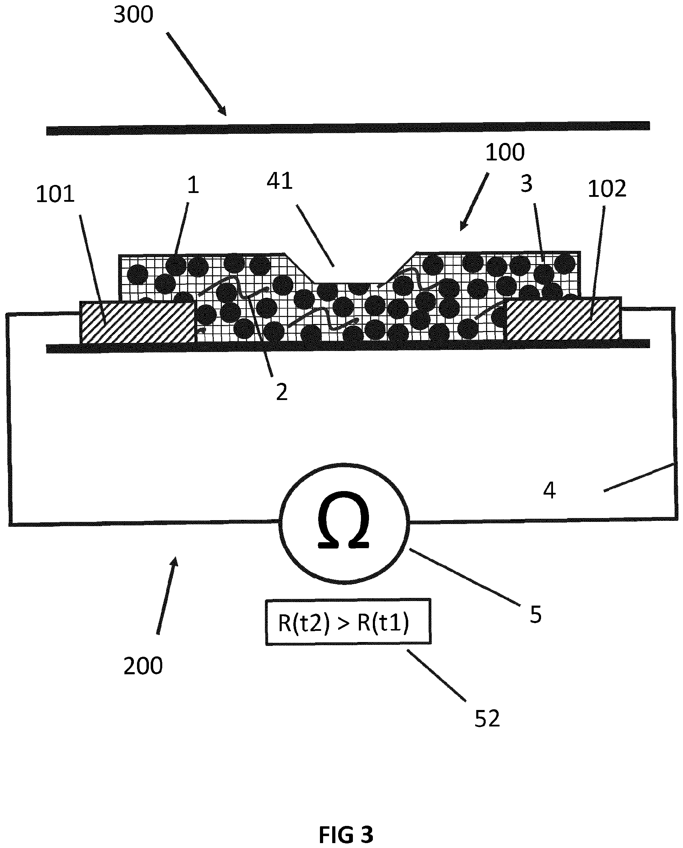

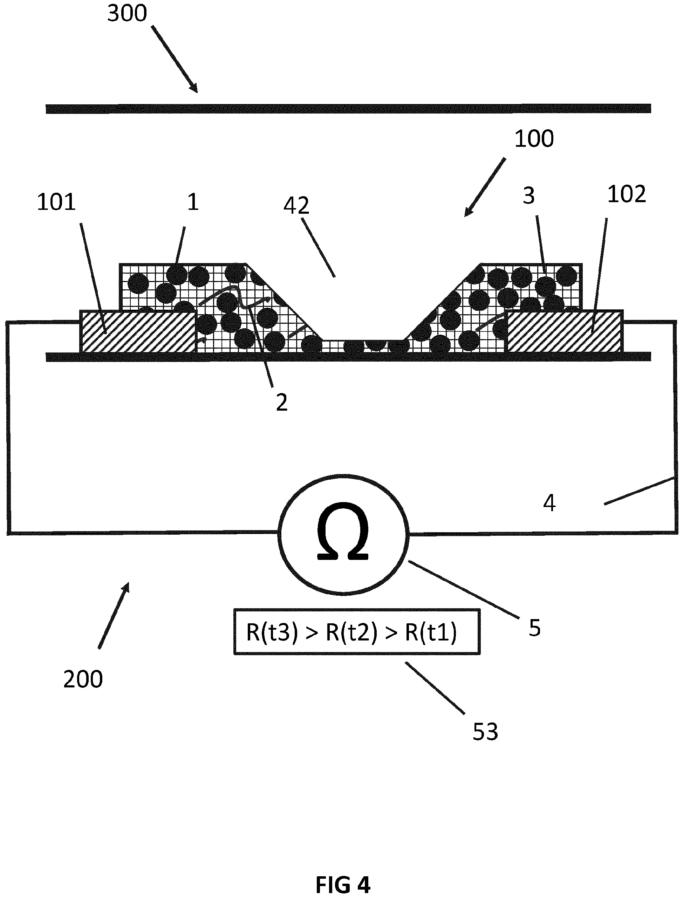

The measurement principle of the sensor system **200** is further understood by looking at the illustrations of figures 3 and 4. On figure 3, the electrically conductive ceramic coating **100** of figure 2 was subject to erosion with formed a loss of coating material in the area between both electrical contacts **101, 102.** The deterioration **41** thus created leads to a measured electrical resistance **52** that is higher than the electrical resistance **51** measured in the undeteriorated electrically conductive ceramic coating **100** of figure 2.

Figure 4 shows an even deeper and wider deterioration **42** of the electrically conductive ceramic coating **100,** which leads to the measurement at resistance measuring device **5** of a resistance **53** even higher that the resistance **52** measured for the deterioration **41** of figure 3.

The observed phenomenon can thus advantageously be used to determine the start of a corrosion or erosion process that deteriorated the electrically conductive ceramic coating **100,** and to prepare reparation of that coating before the damage reaches the asset **300.** The magnitude of the change in the measured electrical resistance **51-53** is an indication of the depth of penetration of the deterioration **41, 42** into the electrically conductive ceramic coating **100.**

Using this detection principle, it is possible to arrange a multitude of electrically conductive ceramic coatings **100** over the surface of an asset **300** in order to ensure that a significant surface of that asset **300** is monitored and reinforced with the ceramic material of the coating. It is also conceivable to arrange a continuous layer all around the asset **300.** The detection principle of the invention could then be ensured by disposing spaced apart electrical contacts **101, 102** at different locations withing the coating, and by measuring the electrical resistance at different pairs of electrical contacts **101, 102.**

Although not illustrated in the figures, one embodiment comprises the arrangement of electrical contacts at opposite sides of the electrically conductive ceramic coating **100.** This is particularly advantageous to reduce the number of electrical contacts around the electrically conductive ceramic coating **100** while still enabling a precise localization of erosion or abrasion sites in the electrically conductive ceramic coating **100.**

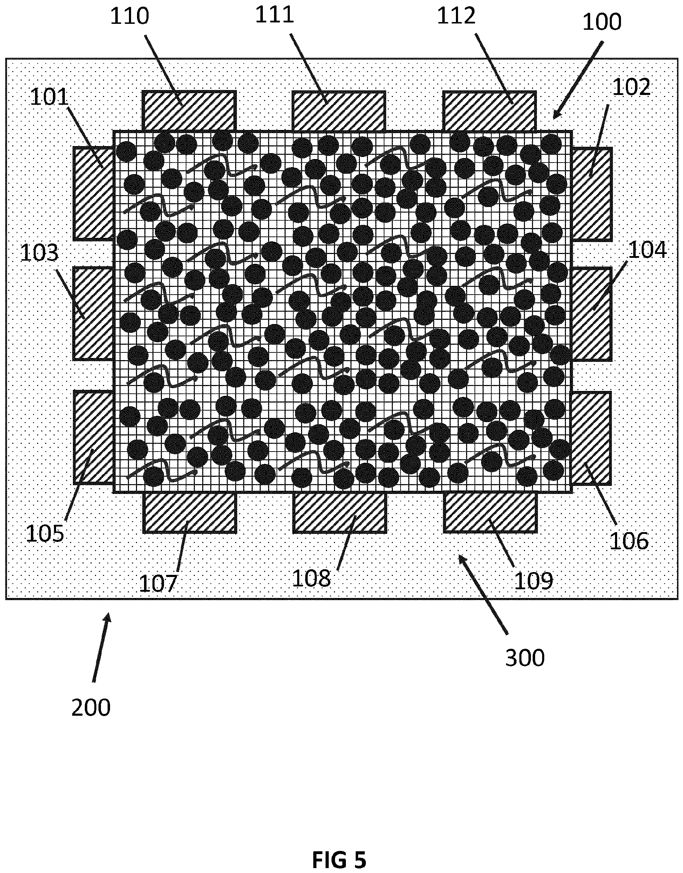

Figure 5 provides a schematic representation of a sensor system **200** comprising an electrically conductive ceramic coating **100** arranged on the surface of an asset **300** seen from the top. In the representation of figure 5, a plurality of electrical contacts **101-112** are arranged on extremities of the patch of electrically conductive ceramic coating **100.** Resistance values **51-53** are measured across different pairs of electrical contacts **101, 102** in order to determine where a corrosion or erosion of the coating may be occurring.

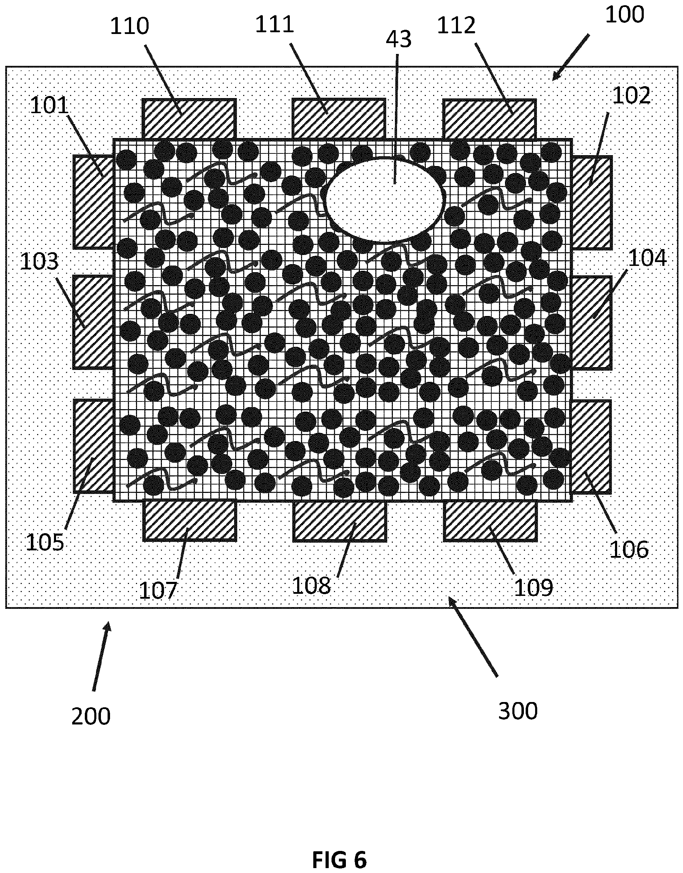

Figure 6 is a schematic representation of the electrically conductive ceramic coating of figure 5, subjected to corrosion or erosion which formed a deterioration **43.** The existence of this deterioration **43** leads to an increase in electrical resistance **51-53** measured across pairs of electrical contacts **101, 102** across the electrically conductive ceramic coating **100.** Of all pairs of electrical contacts **101, 102** that can be used to measure electrical resistance **51-53,** the highest increase in electrical resistance **51-53** is measured across electrodes **101, 102** and **111, 108.** This shows that the setup of figures 5 and 6 can be used not only to detect the presence of a deterioration **43,** but also to locate rather precisely the location of this deterioration **43** as being substantially at the intersection between lines joining two pairs of electrical contacts **101, 102** and **111, 108,** corresponding to the pairs of electrical contacts **101, 102** and **111, 108** for which the measured increase in electrical resistance **51-53** is the highest.

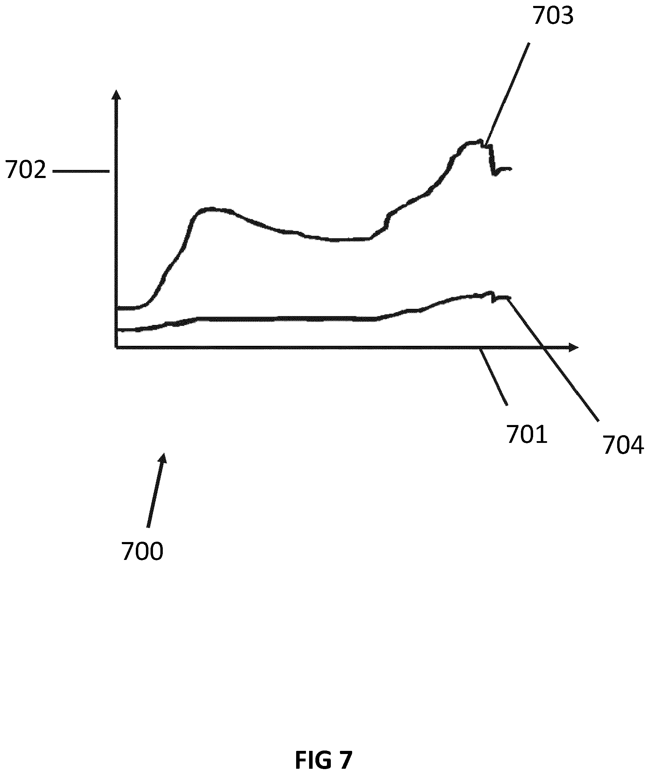

Figure 7 is a diagram **700** representing resistance along a vertical axis **702** as a function of time **701,** as measured by a resistance measuring device **5** across electrodes **101, 102** for the upper curve **703** of the diagram and **105, 106** for the lower curve **704** of the diagram, for the electrically conductive ceramic coating of figure 6. This diagram illustrates that the measurement across pair of electrodes **105, 106** is not very sensitive to the deterioration **43** whereas the measurement across pair of electrodes **101, 102** is much more sensitive to this deterioration **43.**

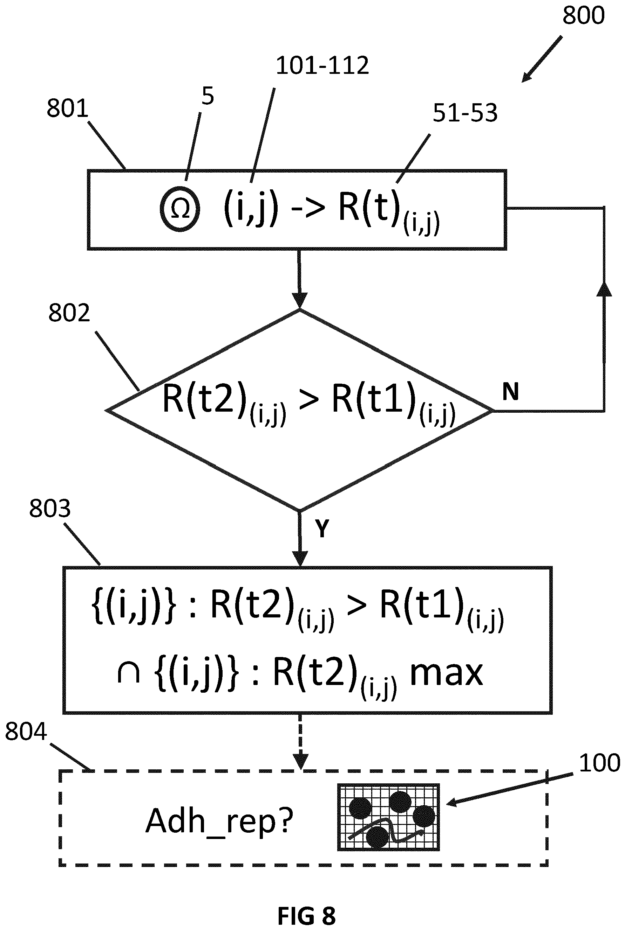

Figure 8 is a flowchart that summarizes steps of an exemplary method **800** to detect the deterioration of an electrically conductive ceramic coating **100** part of a sensor system **200.** At first, method **800** comprises measuring **801** the electrical resistance **51-53** across at least one pair of electrical contacts **101-112** of the electrically conductive ceramic coating **100.** This electrical resistance measurement can be conducted continuously, or in a sampled way by taking repeated measurements at regular intervals, Given the typical time scales at which erosion or corrosion can happen, it is possible to adopt an approach that consumes less electricity and have a resistance measurement only once a week or once a day.

As a next step, upon determining change **802** in the measured electrical resistance **51-53,** the method **800** seeks the pairs of electrical contacts **101-112** for which a change of electrical resistance **51-53** is determined and a deterioration **41-43** of the electrically conductive ceramic coating **100** can be located as being at the intersection of lines joining electrical contacts **101-112** for which the measured change in resistance is the highest.

If there is no change in resistance detected, the first step is continued. In fact, measurement of the electrical resistance **51-53** is advantageously continued throughout the method **800** so that not only an initial change in the electrical resistance **51-53** can be determined but also further evolution and in particular rate of increase in the value of the measured electrical resistance **51-53** over time. If it is noticed that the measured electrical resistance **51-53** tends to increase faster than before, this is a helpful indication that the electrically conductive ceramic coating **100** is in urgent need of repair.

If a deterioration **41-43** of the electrically conductive ceramic coating **100** is detected, it is advantageous to repair **804** the damage for example by applying some more of the composition prepared as described above, place the composition on the damaged portion and cure it as explained above.

Details of possible exemplary version for the composition of the electrically conductive ceramic coating are provided in the examples shown below.

### Examples

| **Sample n°** | **1** | **2** | **3** | **4** | **5** |
|---|---|---|---|---|---|
| Epoxy Resin | 42.8 | 43.9 | 44.4 | 44.2 | 18.7 |
| Epoxy Diluent | | | | | 8.9 |
| CNT | 2.2 | 1.1 | 0.6 | 0.8 | 1.4 |
| Silicon Carbide (particle ranging from 10-280 grits) | 53 | 53 | 53 | 53 | 60 |
| Alumina | 2 | 2 | 2 | 2 | 11 |

| **Hardener Ingredients (for respective samples)** | **1** | **2** | **3** | **4** | **5** |
|---|---|---|---|---|---|
| Polyamine | 22 | 22 | 22 | 22 | 16.5 |
| Polyamide | 72 | 72 | 72 | 72 | 12.2 |
| Accelerator | 6 | 6 | 6 | 6 | |
| Alumina | | | | | 10.9 |
| Silicon Carbide (particle ranging from 10-280 grits) | | | | | 59.2 |
| Fumed Silica | | | | | 1.2 |

| **Characteristics** | | | | | |
|---|---|---|---|---|---|
| Mix Ratio, Resin to Hardener | 4.8:1 | 4.8:1 | 4.8:1 | 4.8:1 | 4.7:1 |
| Filler % in coating | 45.5 | 45.5 | 45.5 | 45.5 | 71.05 |
| Resistance 10X9X0.5 cm | 1.5 KΩ | 13.5 KΩ | 4 3 MΩ | 74 KΩ | 9 KΩ |

Upon testing different thicknesses for the electrically conductive ceramic coating **100,** it was noticed that the measured electrical resistance **51-53** across the coating increases as the thickness of the coating decreases. Suitable thicknesses for implementing embodiments of the invention can typically be situated in range between 2 mm and 15 mm.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the various embodiments in any way. Rather, the foregoing detailed description will provide those skilled in the art with a convenient road map for implementing an exemplary embodiment as contemplated herein. It being understood that various changes may be made in the function and arrangement of elements described in an exemplary embodiment without departing from the scope of the various embodiments as set forth in the appended claims.

## Claims

1. An electrically conductive ceramic coating (100) for monitoring degradation of said ceramic coating (100), the electrically conductive ceramic coating (100) comprising:
(d) at least one ceramic filler (1) in the form of at least one among: beads, needles, plates and particles;
(e) at least one electrically conductive filler (2);
(f) a thermoset resin (3),
wherein the at least one electrically conductive filler (2) is dispersed within the mix of thermoset resin (3) and at least one ceramic filler (1) so as to form conduction paths throughout the electrically conductive ceramic coating (100).

2. The electrically conductive ceramic coating (100) according to claim 1, wherein the at least one ceramic filler (1) is chosen from among: alumina, silicon carbide, calcium carbonate, silica, steel, titanium, zirconium, needle-shaped wollastonite, plate-shaped mica.

3. The electrically conductive ceramic coating (100) according to any one of the preceding claims, wherein the at least one electrically conductive filler (2) comprises electrically conductive carbon nanostructures.

4. The electrically conductive ceramic coating (100) according to claim 3, the at least one electrically conductive filler (2) comprises at least one among: single wall electrically conductive carbon nanotubes, multi-walled electrically conductive carbon nanotubes.

5. The electrically conductive ceramic coating (100) according to any one of the preceding claims, wherein the epoxy resin (3) comprises at least one among: novolac, bisphenol-A, bisphenol-F, urethane, acrylic, vinyl ester, an epoxy-siloxane blend.

6. The electrically conductive ceramic coating (100) according to any one of the preceding claims, wherein the at least one ceramic filler (1) represents 50% to 85% of the weight of the electrically conductive ceramic coating (100).

7. The electrically conductive ceramic coating (100) according to any one of the preceding claims, wherein the at least one electrically conductive filler (2) represents 0,05 % to 2,0 % of the weight of the electrically conductive ceramic coating (100).

8. A sensor system (200) for monitoring degradation of an electrically conductive ceramic coating (100) according to any one of the preceding claims comprising:
- at least one electrically conductive ceramic coating (100) according to any one of the preceding claims arranged on a surface of an asset (300) and comprising at least two spaced apart contact points;
- at least two electrical contacts (101;102), each of the at least two electrical contacts (101; 102) being arranged at each of the at least two spaced apart contact points;
- a resistance measuring device (5) configured to measure resistance (51-53) across the at least two electrical contacts (101; 102).

9. The sensor system (200) according to claim 8, wherein the at least two electrical contacts (101; 102) comprise at least three electrical contacts (101-112) or more, arranged at three or more corresponding spaced apart contact points, the resistance measuring device (5) being configured to measure the resistance (51-53) across any combination of two different electrical contacts (101-112).

10. The sensor system (200) according to claim 9, wherein the at least two electrical contacts (101; 102) comprise a plurality of electrical contacts (101-112) arranged at different contacts points around the at least one electrically conductive ceramic coating (100), so that a change in measured resistance across two pairs of different electrical contacts (101-112) enables a determination of the location of a deterioration (41-43) of the at least one electrically conductive ceramic coating (100).

11. The sensor system (200) according to any one of claims 8 to 10, wherein the asset (300) comprises a plurality of electrically conductive ceramic coatings (100) according to any one of claims 1 to 7 arranged on the surface of the asset (300), each electrically conductive ceramic coating (100) comprising:
- at least two spaced apart contact points;
- at least two electrical contacts (101; 102), each of the at least two electrical contacts (101; 102) being arranged at each of the at least two spaced apart contact points;
- a resistance measuring device (5) configured to measure resistance (51-53) across the at least two electrical contacts (101; 102).

12. Method (800) for detecting a deterioration of an electrically conductive ceramic coating (100) according to any one of claims 1 to 7, the method comprising, in a sensor system (200) according to any one of claims 8 to 11:
- measuring (801) a resistance (51-53) across at least two different electrical contacts (101; 102);
- upon detecting a change (802) in the measured resistance (51-53), determining, based on the detected change, that a corresponding electrically conductive coating (100) at which the change in resistance is measured is deteriorated.

13. The method (800) according to claim 12, further comprising, in a sensor system (200) comprising a plurality of electrical contacts (101-112) arranged at different contacts points around the at least one electrically conductive ceramic coating (100):
- measuring (801) a resistance (51-53) across different pairs of electrical contacts (101; 102);
- upon detecting a change (802) of the measured resistance across at least two different pairs of electrical contacts (101-112), determine (803) that a deterioration of the at least one electrically conductive ceramic coating (100) occurred at an intersection of lines joining electrical contacts (101-112) of the at least two different pairs.

14. The method (800) according to any one of claims 12 or 13, further comprising, in a sensor system (200) comprising a plurality of electrical contacts (101-112) arranged at different contacts points around the at least one electrically conductive ceramic coating (100):
- measuring (801) a resistance (51-53) across different pairs of electrical contacts (101; 102);
- upon detecting a change (802) of the measured resistance (51-53) across at least two different pairs of electrical contacts (101; 102), determine that a deterioration of the at least one electrically conductive ceramic coating (100) occurred at an intersection of lines joining electrical contacts (101-112) of the at least two different pairs for which the change in measured resistance (51-53) is the highest among the measured changes in resistance (51-53).

15. The method (800) according to any one of claims 12 to 14, further comprising a determination of a degree of the deterioration based on the amplitude of the change in measured resistance (51-53).
